# EUROPÄISCHE PATENTSCHRIFT

(11) **EP 2 750 916 B1**
(45) Veröffentlichungstag und Bekanntmachung des Hinweises auf die Patenterteilung: **21.12.2016**
(21) Anmeldenummer: 12759010.7
(22) Anmeldetag: 28.08.2012
(51) Int. Cl.: B60K 37/06, G01C 21/26, G04G 9/00

(54) **VERFAHREN ZUM BEREITSTELLEN EINER BEDIENVORRICHTUNG IN EINEM FAHRZEUG UND BEDIENVORRICHTUNG FÜR EIN FAHRZEUG**
METHOD FOR PROVIDING AN OPERATING DEVICE IN A VEHICLE, AND OPERATING DEVICE FOR A VEHICLE
PROCÉDÉ DE FOURNITURE D'UN DISPOSITIF DE COMMANDE DANS UN VÉHICULE, AINSI QUE DISPOSITIF DE COMMANDE POUR UN VÉHICULE

(30) Priorität: 03.09.2011 DE 102011112442
(43) Veröffentlichungstag der Anmeldung: 09.07.2014
(73) Patentinhaber: Volkswagen Aktiengesellschaft, 38440 Wolfsburg (DE)
(72) Erfinder: JUN, Mi-Ran, 12059 Berlin (DE); BUDZYNSKI, Tobias, 13187 Berlin (DE)
(86) Internationale Anmeldenummer: PCT/EP2012/003608
(87) Internationale Veröffentlichungsnummer: WO 2013/029778

(56) Entgegenhaltungen:
- JP-A- 2005 121 425

## Beschreibung

Die vorliegende Erfindung betrifft ein Verfahren zum Bereitstellen einer Bedienvorrichtung in einem Fahrzeug. Bei dem Verfahren werden von einer Steuervorrichtung Graphikdaten erzeugt, die eine Anzeigefläche so ansteuern, dass ein graphisches Objekt mit einer Darstellung zumindest eines Teils der Erdoberfläche angezeigt wird. Die Darstellung des angezeigten Teils der Erdoberfläche ist dabei in geographische Gebiete unterschiedlicher Zeitzonen unterteilt. Ferner betrifft die Erfindung eine Bedienvorrichtung für ein Fahrzeug mit einer Anzeigefläche zur graphischen Darstellung von Informationen in dem Fahrzeug. Die Bedienvorrichtung umfasst des Weiteren eine Steuervorrichtung, mit welcher Graphikdaten für ein auf der Anzeigefläche darstellbares graphisches Objekt erzeugbar sind, das eine Darstellung zumindest eines Teils der Erdoberfläche anzeigt. Auch in diesem Fall ist die Darstellung des angezeigten Teils der Erdoberfläche in geographische Gebiete unterschiedlicher Zeitzonen unterteilt. Die Bedienvorrichtung umfasst ferner eine mit der Steuervorrichtung gekoppelte Eingabeeinrichtung, mit welcher die Position eines Betätigungsobjekts vor oder auf der Anzeigefläche erfassbar ist.

Mit der Zunahme elektronischer Einrichtungen im Fahrzeug wurde es erforderlich, eine größere Informationsmenge im Fahrzeug darzustellen. Moderne Fahrzeuge umfassen beispielsweise neben einer Multifunktionsanzeige eine Vielzahl von Fahrerassistenzsystemen, deren Informationen im Fahrzeug angezeigt werden müssen. Des Weiteren umfassen Fahrzeuge häufig ein Navigationssystem. Mittels eines solchen Navigationssystems können digitale geographische Straßenkarten mit einer Route und gegebenenfalls vielfältigen Zusatzinformationen angezeigt werden. Schließlich umfassen moderne Fahrzeuge vielfach Kommunikations- und Multimediaanwendungen, einschließlich einer Mobiltelefonschnittstelle und Einrichtungen zur Wiedergabe von Musik und Sprache. Auch für diese Anwendungen muss in dem Fahrzeug die Möglichkeit bestehen, Informationen anzuzeigen.

Um die vielfältigen Informationen flexibel anzeigen zu können, werden z. B. frei programmierbare Displays eingesetzt, die häufig auch die Wiedergabe herkömmlicher mechanischer Instrumente übernehmen. In der DE 10 2006 032 118 A1 ist beispielsweise ein Kombiinstrument für ein Kraftfahrzeug beschrieben, welches ein Display umfasst, mit dem variabel die Geschwindigkeit des Kraftfahrzeugs, die Drehzahl des Motors des Kraftfahrzeugs, die Temperatur des Motors des Kraftfahrzeugs, die Tankfüllung und/oder die Zeit angezeigt werden können. Außerdem ist es möglich, Informationen eines Navigationssystems, eines Telefons, einer Musikanlage, eines Infotainmentsystems und/oder einer Klimaanlage anzuzeigen.

Zusätzlich zu dem Kombiinstrument wird vielfach eine Anzeigevorrichtung oberhalb der Mittelkonsole des Fahrzeugs angeordnet, über welche weitere Informationen angezeigt werden können. Diese Anzeigevorrichtung wird insbesondere als Multifunktionsanzeige und zur Darstellung einer geographischen Karte eines Navigationssystems verwendet. Eine solche Multifunktionsanzeige ist beispielsweise in der DE 199 41 956 A1 beschrieben.

Für die Anzeige von Information in einem Fahrzeug ergeben sich sehr spezielle Anforderungen. Die Informationsaufnahme erfolgt im Fahrzeug unter anderem durch den Fahrer. Die Informationen sollten somit im Fahrzeug so dargestellt werden, dass die Informationsaufnahme durch den Fahrer nicht zu einer Ablenkung während der Fahrt führt. Die dargestellten Informationen sollten daher intuitiv und schnell vom Fahrer erfassbar sein, so dass er für die Informationsaufnahme nur sehr kurzzeitig den Blick vom Fahrgeschehen abwenden muss. Wird die Bedienung der Fahrzeugeinrichtungen von einer Anzeige unterstützt oder geführt, sollte die Anzeige so erfolgen, dass der Fahrer für die Bedienung nur sehr kurz die Anzeige betrachten muss, um die Bedienung durchzuführen.

Die JP 2005 121425 A beschreibt ein Verfahren mit den Merkmalen des Oberbegriffs des Anspruchs 1 bzw. eine Bedienvorrichtung mit den Merkmalen des Oberbegriffs des Anspruchs 7.

Der vorliegenden Erfindung liegt die Aufgabe zugrunde, ein Verfahren und eine Bedienvorrichtung der eingangs genannten Art bereitzustellen, mit welchen eine Zeitzone für den Nutzer schnell und intuitiv eingestellt werden kann.

Erfindungsgemäß wird diese Aufgabe durch ein Verfahren mit den Merkmalen des Anspruchs 1 und eine Bedienvorrichtung mit den Merkmalen des Anspruchs 7 gelöst. Vorteilhafte Ausgestaltungen und Weiterbildungen ergeben sich aus den abhängigen Ansprüchen.

Bei dem erfindungsgemäßen Verfahren werden von einer Steuervorrichtung Graphikdaten erzeugt, die eine Anzeigefläche so ansteuern, dass ein graphisches Objekt mit einer Darstellung zumindest eines Teils der Erdoberfläche angezeigt wird. Beispielsweise kann eine sogenannte Weltkarte dargestellt werden, auf welcher die Umrisse der Kontinente und gegebenenfalls der Länder symbolisch dargestellt werden. Die Darstellung des angezeigten Teils der Erdoberfläche ist in geographische Gebiete unterschiedlicher Zeitzonen unterteilt. Eine Zeitzone ist ein Bereich der Erdoberfläche, der eine einheitliche Uhrzeit und ein einheitliches Datum hat. Bei dem erfindungsgemäßen Verfahren wird ferner die Position eines Betätigungsobjekts vor oder auf der Anzeigefläche erfasst. Bei dem Betätigungsobjekt handelt es sich insbesondere um einen Finger bzw. die Fingerspitze eines Nutzers, zum Beispiel des Fahrers des Fahrzeugs. In Abhängigkeit von der erfassten Position des Betätigungsobjekts relativ zu den angezeigten geographischen Gebieten unterschiedlicher Zeitzonen in der Darstellung des graphischen Objekts wird ein geographisches Gebiet, welches zu einer einzigen Zeitzone gehört, ausgewählt und hervorgehoben angezeigt. Ferner wird zumindest einem Zeitgeber des Fahrzeugs die Zeitzone des ausgewählten geographischen Gebiets zugeordnet.

Bei dem erfindungsgemäßen Verfahren kann der Nutzer vorteilhafterweise einem Zeitgeber des Fahrzeugs auf sehr einfache, intuitive und schnelle Weise eine bestimmte Zeitzone zuordnen. Bei der Auswahl der Zeitzone wird er von der graphischen Darstellung auf der Anzeigefläche unterstützt.

Die hervorgehobene Darstellung des ausgewählten geographischen Gebiets kann beispielsweise durch eine andersfarbige Darstellung, durch eine andere Sättigung der Darstellung des Gebiets oder auf beliebige andere Weise erfolgen, bei der sich das ausgewählte Gebiet für den Betrachter von den anderen geographischen Gebieten in irgendeiner Weise abhebt.

Gemäß einer Weiterbildung des erfindungsgemäßen Verfahrens werden von der Steuervorrichtung Graphikdaten erzeugt, die die Anzeigefläche so ansteuern, dass weitere graphische Objekte angezeigt werden. Beispielsweise kann ein graphisches Objekt einen Teil der Länder und/oder Städte und/oder Regionen benennen, welche von dem ausgewählten geographischen Gebiet umfasst sind. Ein weiteres geographisches Objekt zeigt beispielsweise die aktuelle Uhrzeit in dem ausgewählten geographischen Gebiet an. Ein noch weiteres graphisches Objekt zeigt beispielsweise die relative Zeitverschiebung des ausgewählten geographischen Gebiets zu einem Gebiet einer bestimmten Zeitzone an. Beispielsweise wird die Zeitverschiebung relativ zu der sogenannten mittleren Greenwich-Zeit (GMT, Greenwich Mean Time) angezeigt. Die Darstellung der weiteren graphischen Objekte hat den Vorteil, dass sich der Betrachter noch einfacher und intuitiver bei der Auswahl einer bestimmten Zeitzone orientieren kann.

Gemäß einer Weiterbildung des erfindungsgemäßen Verfahrens wird ein geographisches Gebiet ausgewählt und hervorgehoben dargestellt, wenn das Betätigungsobjekt eine berührungsempfindliche Oberfläche der Anzeigefläche in dem Bereich berührt, in dem das Gebiet angezeigt wird. Der Inhalt zumindest eines weiteren graphischen Objekts wird dann so verändert, dass die aktuelle Uhrzeit und/oder die relative Zeitverschiebung des ausgewählten geographischen Gebiets angezeigt wird, wobei das ausgewählte geographische Gebiet dem Zeitgeber jedoch noch nicht zugeordnet wird, solange das Betätigungsobjekt (5) die berührungsempfindliche Oberfläche (6) der Anzeigefläche (2) berührt. Das ausgewählte geographische Gebiet wird in diesem Fall dem Zeitgeber erst dann zugeordnet, wenn die Berührung des Betätigungsobjekts von der berührungsempfindlichen Oberfläche der Anzeigefläche gelöst wird. Bei dieser Ausgestaltung des erfindungsgemäßen Verfahrens wird als Eingabeeinrichtung somit ein sogenannter Touchscreen verwendet. Durch Berührung des Touchscreens in dem Bereich, in dem ein Gebiet einer bestimmten Zeitzone angezeigt wird, kann der Nutzer dieses Gebiet in seiner Darstellung hervorheben. Ferner werden in diesem Fall bevorzugt die vorstehend beschriebenen weiteren graphischen Objekte an das ausgewählte geographische Gebiet angepasst. Beispielsweise werden Länder, Städte oder Regionen in diesem Gebiet benannt, die aktuelle Uhrzeit dieses Gebiets angezeigt und die relative Zeitverschiebung dargestellt. Solange der Nutzer den Touchscreen berührt, wird dem Zeitgeber jedoch noch nicht das ausgewählte geographische Gebiet zugeordnet, d.h. der Zeitgeber wird noch nicht auf die Zeitzone dieses Gebiets eingestellt. Erst wenn der Nutzer das Betätigungsobjekt, d.h. zum Beispiel seine Fingerspitze, von dem Touchscreen löst, wird der Zeitgeber auf die Zeitzone des ausgewählten Gebiets eingestellt. Erst in diesem Fall ist nämlich der Bedienvorgang des Nutzers zum Einstellen des Zeitgebers beendet. Während der Nutzer den Touchscreen berührt, kann er noch das Betätigungsobjekt auf dem Touchscreen bewegen und sich auf diese Weise die Informationen der weiteren graphischen Objekte zu verschiedenen Zeitzonen anzeigen lassen. Hierdurch wird der Nutzer vorteilhafterweise bei der Auswahl der einzustellenden Zeitzone unterstützt.

Die erfindungsgemäße Bedienvorrichtung ist dadurch gekennzeichnet, dass in Abhängigkeit von der erfassten Position des Betätigungsobjekts relativ zu den angezeigten geographischen Gebieten unterschiedlicher Zeitzonen von der Steuervorrichtung Graphikdaten erzeugbar sind, welche die Anzeigefläche so ansteuern, dass ein ausgewähltes geographisches Gebiet, welches zu einer einzigen Zeitzone gehört, hervorgehoben angezeigt wird, und dass von der Steuervorrichtung ein Steuersignal für einen Zeitgeber des Fahrzeugs erzeugbar ist, welches der Zeitzone des ausgewählten geographischen Gebiets zugeordnet ist.

Die erfindungsgemäße Bedienvorrichtung ist insbesondere zum Ausführen des vorstehend beschriebenen erfindungsgemäßen Verfahrens ausgebildet. Es weist somit dieselben Vorteile wie das erfindungsgemäße Verfahren auf.

Die Erfindung betrifft des Weiteren ein Fahrzeug mit der vorstehend beschriebenen Bedienvorrichtung.

Die Erfindung wird nun anhand eines Ausführungsbeispiels mit Bezug zu den Zeichnungen erläutert.
- Figur 1: zeigt ein Ausführungsbeispiel des erfindungsgemäßen Fahrzeugs, in dem ein Ausführungsbeispiel der erfindungsgemäßen Bedienvorrichtung angeordnet ist,
- Figur 2: zeigt den Aufbau eines Ausführungsbeispiels der erfindungsgemäßen Bedienvorrichtung und deren Kopplung mit anderen Einrichtungen des Fahrzeugs,
- Figur 3: zeigt eine von einem Ausführungsbeispiel des erfindungsgemäßen Verfahrens erzeugte Darstellung auf der Anzeigefläche der erfindungsgemäßen Bedienvorrichtung und
- Figur 4: zeigt eine andere von einem Ausführungsbeispiel des erfindungsgemäßen Verfahrens erzeugte Darstellung auf der Anzeigefläche der erfindungsgemäßen Bedienvorrichtung.

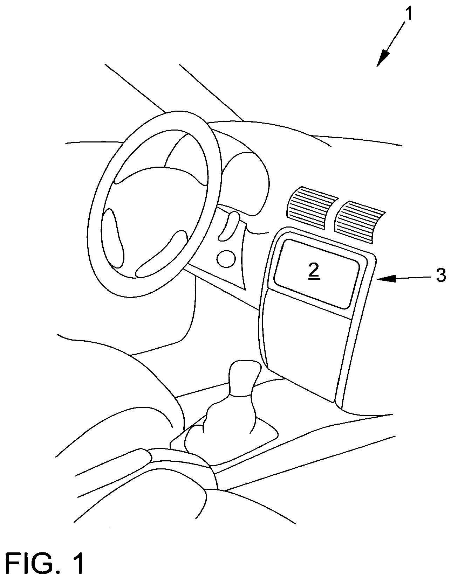

In Figur 1 ist ein Ausführungsbeispiel des erfindungsgemäßen Fahrzeugs 1 gezeigt. In der Mittelkonsole des Fahrzeugs 1 ist eine Bedienvorrichtung 3 mit einer Anzeigefläche 2 angeordnet.

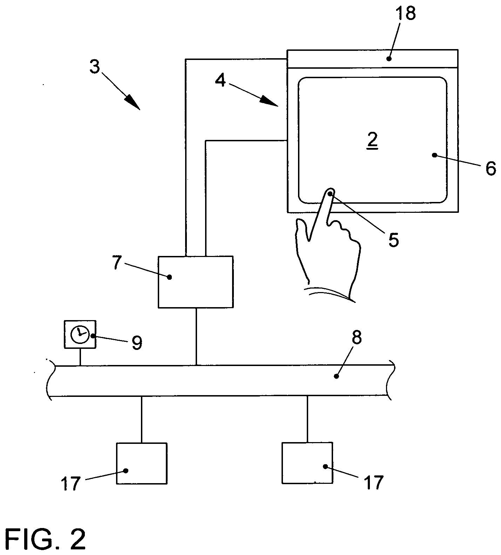

Im Folgenden wird der Aufbau des Ausführungsbeispiels der Bedienvorrichtung 3 mit Bezug zur Figur 2 im Detail erläutert:
Die Bedienvorrichtung 3 umfasst eine Anzeigevorrichtung 4, welche eine Anzeigefläche 2 aufweist. Die Anzeigefläche 2 kann von einem Display, insbesondere einem Flüssigkristalldisplay, beliebiger Bauart bereitgestellt werden.

Auf der Anzeigefläche 2 ist eine berührungsempfindliche Oberfläche 6 ausgebildet, so dass auf an sich bekannte Weise ein sogenannter Touchscreen bereitgestellt wird. Die berührungsempfindliche Oberfläche 6 stellt dabei eine Eingabeeinrichtung bereit. Der Nutzer kann mit einem Betätigungsobjekt, zum Beispiel mit seiner Fingerspitze 5, die berührungsempfindliche Oberfläche 6 berühren. Die Position der Berührung wird erfasst und in Verbindung mit dem dargestellten Anzeigeinhalt werden Eingabesignale erzeugt.

Die Anzeigevorrichtung 4 ist mit einer Steuervorrichtung 7 gekoppelt. Die Steuervorrichtung 7 erzeugt zum einen Graphikdaten, welche an die Anzeigevorrichtung 4 übertragen werden und mittels welcher eine beliebige Anzeige auf der Anzeigefläche 2 erzeugt wird. Zum anderen werden der Steuervorrichtung 7 Daten zu den Positionen übertragen, bei denen ein Betätigungsobjekt, wie die Fingerspitze 5 des Nutzers, die berührungsempfindliche Oberfläche 6 berührt.

Schließlich ist bei der Anzeigevorrichtung 4 ein Annäherungssensor 18 angeordnet, der auch mit der Steuervorrichtung 7 gekoppelt ist. Mittels des Annäherungssensors 18 kann die Annäherung eines Betätigungsobjekts 5 an die berührungsempfindliche Oberfläche 6 erfasst werden. Beispielsweise ist vor der Anzeigefläche 2 bzw. der berührungsempfindlichen Oberfläche 6 ein Detektionsraum definiert. Der Eintritt eines Betätigungsobjekts 5 in diesen Detektionsraum wird von dem Annäherungssensor 18 erfasst, woraufhin dieser ein entsprechendes Signal an die Steuervorrichtung 7 überträgt.

Die Steuervorrichtung 7 ist ferner über einen Datenbus 8 des Fahrzeugs 1 mit weiteren Einrichtungen 17 des Fahrzeugs 1 gekoppelt. Ferner ist die Steuervorrichtung 7 über den Datenbus 8 mit einem Zeitgeber 9 des Fahrzeugs 1 gekoppelt. Bei diesem Zeitgeber 9 kann es sich um eine zentrale Uhr des Fahrzeugs 1 handeln, welche Zeitsignale für die Anzeige der Uhrzeit bereitstellt. Ferner kann der Zeitgeber 9 jedoch auch den weiteren Einrichtungen 17 des Fahrzeugs 1 Zeitsignale zur weiteren Verarbeitung zur Verfügung stellen.

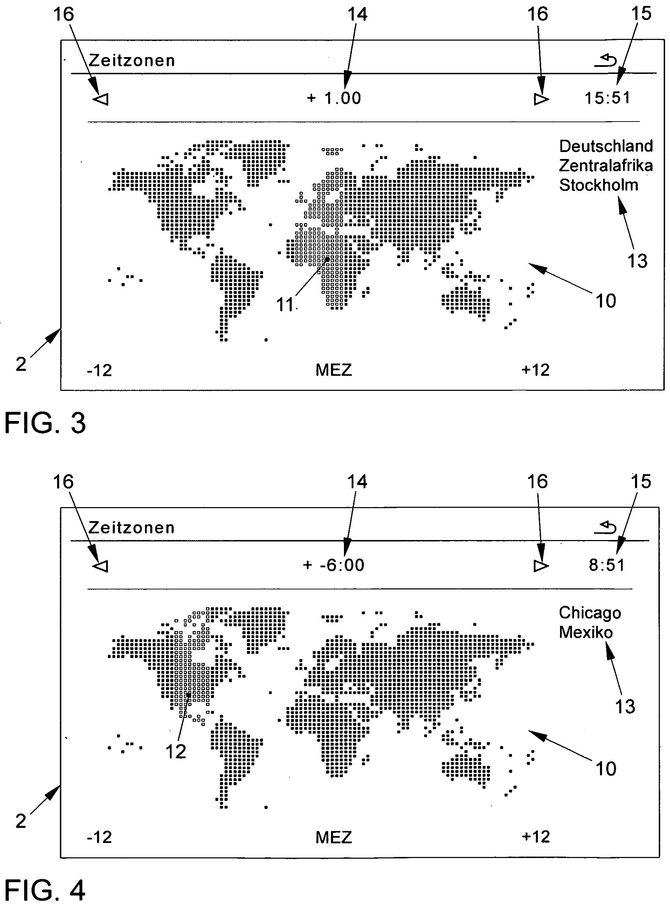

Die Steuervorrichtung 7 ist so ausgebildet, dass ein Nutzer den Zeitgeber 9 auf eine bestimmte Zeitzone einstellen kann. Hierfür wird der Nutzer von der von der Steuervorrichtung 7 erzeugten Anzeige auf der Anzeigefläche 2 unterstützt, wie es im Folgenden mit Bezug zu den Figuren 3 und 4 an Hand eines Ausführungsbeispiels des erfindungsgemäßen Verfahrens erläutert wird:
Von der Steuervorrichtung 7 werden Graphikdaten erzeugt, die die Anzeigefläche 2 so ansteuern, dass ein graphisches Objekt 10 mit einer zweidimensionalen ebenen Darstellung die Erdoberfläche angezeigt wird. Von dem graphischen Objekt 10 wird, wie in Figur 3 gezeigt, eine Weltkarte angezeigt. Die von den Kontinenten bedeckten Teile der Erdoberfläche sind durch dunkle Punkte schematisch hervorgehoben. Das graphische Objekt 10 ist in unterschiedliche Gebiete 11, 12 unterteilt. Die Gebiete 11, 12 entsprechen geographischen Gebieten der Erdoberfläche, die einer einzigen Zeitzone zugeordnet sind.

Eines dieser geographischen Gebiete 11, 12 kann ausgewählt sein. Das ausgewählte Gebiet ist bei dem in Figur 3 wiedergegebenen Ausgangszustand des erfindungsgemäßen Verfahrens das geographische Gebiet 11, dessen Zeitzone derzeit bei dem Zeitgeber 9 eingestellt ist. Das ausgewählte geographische Gebiet 11 wird in beliebiger Weise hervorgehoben innerhalb der anderen Gebiete dargestellt. Bei dem in Figur 3 gezeigten Beispiel sind die Punkte des ausgewählten geographischen Gebiets 11 heller dargestellt als die Punkte, welche die Kontinente der anderen Gebiete darstellen.

Ergänzend zu dem graphischen Objekt 10 werden von der Anzeigefläche 2 noch weitere graphische Objekte angezeigt: Rechts neben dem graphischen Objekt 10 wird ein graphisches Objekt 13 angezeigt, welches einen Teil der Länder, Städte und/oder Regionen benennt, welche von dem ausgewählten geographischen Gebiet 11 umfasst sind. Bei der in Figur 3 wiedergegebenen Anzeige kann der Nutzer durch das graphische Objekt 13 schnell erkennen, dass Deutschland, Zentralafrika und Stockholm von dem ausgewählten geographischen Gebiet 11 umfasst sind.

Des Weiteren wird ein graphisches Objekt 14 angezeigt, welches die relative Zeitverschiebung des ausgewählten geographischen Gebiets 11 relativ zu der mittleren Greenwich-Zeit anzeigt.

Schließlich wird als noch weiteres graphisches Objekt 15 die aktuelle Uhrzeit in dem ausgewählten geographischen Gebiet 11 angezeigt.

Der Nutzer kann nun die Einstellung des Zeitgebers 9 wie folgt ändern:
Der Nutzer nähert sich mit seiner Fingerspitze 5 der Anzeigefläche 2 an. Tritt die Fingerspitze 5 in den Detektionsraum ein, wird dies von dem Annäherungssensor 18 erfasst. Dieser überträgt ein entsprechendes Signal an die Steuervorrichtung 7. Die Steuervorrichtung 7 wechselt daraufhin die Darstellung auf der Anzeigefläche 2 von einem Anzeigemodus in einen Bedienmodus, bei welchem betätigbare Schaltflächen angezeigt werden. Tippt der Nutzer nun eine der Schaltflächen 16 an, wird das ausgewählte geographische Gebiet 11 um eine Zeitzone nach Osten oder Westen, d.h. in der Darstellung gemäß Figur 3 um eine Position nach links oder nach rechts verschoben. Durch mehrmaliges Antippen der Schaltflächen 16 kann der Nutzer die gewünschte Zeitzone auswählen. Es folgt nach Ablauf eines Zeitintervalls (einem sogenannten Time-Out) die Zuordnung der Zeitzone des ausgewählten geographischen Gebiets 12 für den Zeitgeber 9. Hierfür überträgt die Steuervorrichtung 7 ein entsprechendes Signal über den Datenbus 8 an den Zeitgeber 9. In Figur 4 ist gezeigt, wie sich die Anzeige auf der Anzeigefläche 2 verändert hat, wenn der Nutzer als ausgewähltes geographisches Gebiet das Gebiet 12 ausgewählt hat, welches Chicago und Mexiko umfasst. Die Darstellung des graphischen Objekts 10 wurde entsprechend angepasst. Das geographische Gebiet 12 wird nun hervorgehoben dargestellt. Ferner werden auch die Inhalte der graphischen Objekte 13 bis 15 entsprechend angepasst.

Der Nutzer kann jedoch die gewünschte Zeitzone auch auf andere Weise auswählen. Er kann mit der Fingerspitze 5 die dargestellte Erdoberfläche des graphischen Objekts 10 in einem bestimmten geographischen Gebiet berühren. Daraufhin wird das geographische Gebiet, bei welchem die Fingerspitze 5 des Nutzers die berührungsempfindliche Oberfläche 6 auf der Anzeigefläche 2 berührt, ausgewählt und hervorgehoben dargestellt. Gleichzeitig wird auch der Inhalt der weiteren graphischen Objekte 13 bis 15 entsprechend dem ausgewählten geographischen Gebiet angepasst, d. h. es wird insbesondere die relative Zeitverschiebung und die aktuelle Zeit dieser Zeitzone angezeigt. Die Zeiteinstellung wird zu diesem Zeitpunkt jedoch noch nicht verändert. Der Nutzer kann seine Fingerspitze 5 nun über das graphische Objekt 10 bewegen und auf diese Weise andere geographische Gebiete auswählen, woraufhin jeweils der Inhalt der graphischen Objekte 13 bis 15 entsprechend dem ausgewählten geographischen Gebiet angepasst wird.

Hat der Nutzer beispielsweise seine Fingerspitze 5 zu dem geographischen Gebiet 12, wie in Figur 4 gezeigt, bewegt, und löst er seine Fingerspitze 5 dann von der berührungsempfindlichen Oberfläche 6 auf der Anzeigefläche 2, wird dies von der Steuervorrichtung 7 erfasst und als Beendigung des Bedienvorgangs interpretiert. Die Steuervorrichtung 7 erzeugt daraufhin ein Steuersignal, welches Informationen über die ausgewählte Zeitzone des ausgewählten geographischen Gebiets 12 enthält und überträgt dieses Steuersignal über den Datenbus 8 an den Zeitgeber 9. Der Zeitgeber 9 wird daraufhin auf die ausgewählte Zeitzone eingestellt.

### BEZUGSZEICHENLISTE

- 1: Fahrzeug
- 2: Anzeigefläche
- 3: Bedienvorrichtung
- 4: Anzeigevorrichtung
- 5: Betätigungsobjekt, Fingerspitze eines Nutzers
- 6: berührungsempfindliche Oberfläche
- 7: Steuervorrichtung
- 8: Datenbus
- 9: Zeitgeber
- 10: graphisches Objekt
- 11: geographisches Gebiet
- 12: geographisches Gebiet
- 13: graphisches Objekt
- 14: graphisches Objekt
- 15: graphisches Objekt
- 16: Schaltflächen
- 17: Einrichtungen des Fahrzeugs 1
- 18: Annäherungssensor

## Patentansprüche

1. Verfahren zum Bereitstellen einer Bedienvorrichtung (3) in einem Fahrzeug (1), bei dem
- von einer Steuervorrichtung (7) Graphikdaten erzeugt werden, die eine Anzeigefläche (2) so ansteuern, dass ein graphisches Objekt (10) mit einer Darstellung zumindest eines Teils der Erdoberfläche angezeigt wird, und
- die Darstellung des angezeigten Teils der Erdoberfläche in geographische Gebiete (11, 12) unterschiedlicher Zeitzonen unterteilt ist,
**dadurch gekennzeichnet, dass**
- die Position eines Betätigungsobjekts (5) vor oder auf der Anzeigefläche (2) erfasst wird,
- in Abhängigkeit von der erfassten Position des Betätigungsobjekts (5) relativ zu den angezeigten geographischen Gebieten (11, 12) unterschiedlicher Zeitzonen in der Darstellung des graphischen Objekts (10) ein geographisches Gebiet (12), welches zu einer einzigen Zeitzone gehört, ausgewählt und hervorgehoben angezeigt wird und
- zumindest einem Zeitgeber (9) des Fahrzeugs (1) die Zeitzone des ausgewählten geographischen Gebiets (12) zugeordnet wird.

2. Verfahren nach Anspruch 1,
**dadurch gekennzeichnet, dass**
von einer Steuervorrichtung (7) Graphikdaten erzeugt werden, welche die Anzeigefläche (2) so ansteuern, dass ein weiteres graphisches Objekt (13) angezeigt wird, welches einen Teil der Länder und/oder Städte und/oder Regionen benennt, welche von dem ausgewählten geographischen Gebiet (12) umfasst sind.

3. Verfahren nach Anspruch 1 oder 2,
**dadurch gekennzeichnet, dass**
von der Steuervorrichtung Graphikdaten erzeugt werden, welche die Anzeigefläche (2) so ansteuern, dass ein weiteres graphisches Objekt (13) angezeigt wird, welches die aktuelle Uhrzeit in dem ausgewählten geographischen Gebiet (12) anzeigt.

4. Verfahren nach einem der vorhergehenden Ansprüche,
**dadurch gekennzeichnet, dass**
von der Steuervorrichtung (7) Graphikdaten erzeugt werden, welche die Anzeigefläche (2) so ansteuern, dass ein weiteres graphisches Objekt (14) angezeigt wird, welches die relative Zeitverschiebung des ausgewählten geographischen Gebiets (12) zu einem Gebiet einer bestimmten Zeitzone anzeigt.

5. Verfahren nach Anspruch 4,
**dadurch gekennzeichnet, dass**
ein geographisches Gebiet (12) ausgewählt und hervorgehoben dargestellt wird, wenn das Betätigungsobjekt (5) eine berührungsempfindliche Oberfläche (6) der Anzeigefläche (2) in dem Bereich berührt, in dem das geographische Gebiet angezeigt wird, und dass der Inhalt zumindest eines weiteren graphischen Objekts (13, 14) so verändert wird, dass die aktuelle Uhrzeit und/oder die relative Zeitverschiebung des ausgewählten geographischen Gebiets (12) angezeigt wird, das ausgewählte geographische Gebiet (12) dem Zeitgeber jedoch noch nicht zugeordnet wird, solange das Betätigungsobjekt (5) die berührungsempfindliche Oberfläche (6) der Anzeigefläche (2) berührt.

6. Verfahren nach einem der vorhergehenden Ansprüche,
**dadurch gekennzeichnet, dass**
ein geographisches Gebiet (12) ausgewählt und hervorgehoben dargestellt wird, wenn das Betätigungsobjekt (5) eine berührungsempfindliche Oberfläche (6) der Anzeigefläche (2) in dem Bereich berührt, in dem das geographische Gebiet angezeigt wird, und dass das ausgewählte geographische Gebiet (12) dem Zeitgeber zugeordnet wird, wenn die Berührung des Betätigungsobjekts (5) von der berührungsempfindlichen Oberfläche (6) der Anzeigefläche (2) gelöst wird.

7. Bedienvorrichtung (3) für ein Fahrzeug (1) mit
- einer Anzeigefläche (2) zur graphischen Darstellung von Informationen in dem Fahrzeug (1),
- einer Steuervorrichtung (7), mit welcher Graphikdaten für ein auf der Anzeigefläche (2) darstellbares graphisches Objekt (10) erzeugbar sind, das eine Darstellung zumindest eines Teils der Erdoberfläche anzeigt, wobei die Darstellung des angezeigten Teils der Erdoberfläche in geographische Gebiete (11, 12) unterschiedlicher Zeitzonen unterteilt ist,
**dadurch gekennzeichnet,**
- **dass** die Bedienvorrichtung (3) eine mit der Steuervorrichtung (7) gekoppelte Eingabeeinrichtung (6, 18) umfasst, mit welcher die Position eines Betätigungsobjekts (5) vor oder auf der Anzeigefläche (2) erfassbar ist,
- **dass** in Abhängigkeit von der erfassten Position des Betätigungsobjekts (5) relativ zu den angezeigten geographischen Gebieten (11, 12) unterschiedlicher Zeitzonen von der Steuervorrichtung (7) Graphikdaten erzeugbar sind, welche die Anzeigefläche (2) so ansteuern, dass ein ausgewähltes geographisches Gebiet (12), welches zu einer einzigen Zeitzone gehört, hervorgehoben angezeigt wird und
- **dass** von der Steuervorrichtung (7) ein Steuersignal für einen Zeitgeber (9) des Fahrzeugs (1) erzeugbar ist, welches der Zeitzone des ausgewählten geographischen Gebiets (12) zugeordnet ist.

8. Fahrzeug (1) mit einer Bedienvorrichtung (3) nach Anspruch 7.

## Claims

1. Method for providing an operating device (3) in a vehicle (1), in which
- a control device (7) generates graphics data which control a display area (2) in such a manner that a graphical object (10) containing a presentation of at least part of the Earth's surface is displayed, and
- the presentation of the displayed part of the Earth's surface is subdivided into geographical areas (11, 12) in different time zones,
**characterized in that**
- the position of an actuating object (5) in front of or on the display area (2) is detected,
- depending on the detected position of the actuating object (5) relative to the displayed geographical areas (11, 12) in different time zones in the presentation of the graphical object (10), a geographical area (12) which belongs to a single time zone is selected and displayed in highlighted form, and
- the time zone of the selected geographical area (12) is associated with at least one timer (9) of the vehicle (1).

2. Method according to Claim 1, **characterized in that** a control device (7) generates graphics data which control the display area (2) in such a manner that a further graphical object (13) is displayed, which further graphical object names some of the countries and/or cities and/or regions included in the selected geographical area (12).

3. Method according to Claim 1 or 2, **characterized in that** the control device generates graphics data which control the display area (2) in such a manner that a further graphical object (13) is displayed, which further graphical object displays the current time in the selected geographical area (12).

4. Method according to one of the preceding claims, **characterized in that** the control device (7) generates graphics data which control the display area (2) in such a manner that a further graphical object (14) is displayed, which further graphical object displays the relative time difference between the selected geographical area (12) and an area in a particular time zone.

5. Method according to Claim 4, **characterized in that** a geographical area (12) is selected and presented in highlighted form if the actuating object (5) touches a touch-sensitive surface (6) of the display area (2) in the region in which the geographical area is displayed, and **in that** the contents of at least one further graphical object (13, 14) are changed in such a manner that the current time and/or the relative time difference of the selected geographical area (12) is/are displayed, but the selected geographical area (12) is not yet associated with the timer as long as the actuating object (5) is touching the touch-sensitive surface (6) of the display area (2).

6. Method according to one of the preceding claims, **characterized in that** a geographical area (12) is selected and presented in highlighted form if the actuating object (5) touches a touch-sensitive surface (6) of the display area (2) in the region in which the geographical area is displayed, and **in that** the selected geographical area (12) is associated with the timer if the touching of the actuating object (5) is removed from the touch-sensitive surface (6) of the display area (2).

7. Operating device (3) for a vehicle (1), having
- a display area (2) for graphically presenting information in the vehicle (1),
- a control device (7) which can be used to generate graphics data for a graphical object (10) which can be presented on the display area (2) and displays a presentation of at least part of the Earth's surface, the presentation of the displayed part of the Earth's surface being subdivided into geographical areas (11, 12) in different time zones,
**characterized**
- **in that** the operating device (3) comprises an input device (6, 18) which is coupled to the control device (7) and can be used to detect the position of an actuating object (5) in front of or on the display area (2),
- **in that** depending on the detected position of the actuating object (5) relative to the displayed geographical areas (11, 12) in different time zones, the control device (7) can generate graphics data which control the display area (2) in such a manner that a selected geographical area (12) which belongs to a single time zone is displayed in highlighted form, and
- **in that** the control device (7) can generate a control signal for a timer (9) of the vehicle (1), which control signal is associated with the time zone of the selected geographical area (12).

8. Vehicle (1) having an operating device (3) according to Claim 7.

## Revendications

1. Procédé de fourniture d'un dispositif de commande (3) dans un véhicule (1), dans lequel
- des données graphiques sont générées par un dispositif de commande (7) pour piloter une surface d'affichage (2) de manière à afficher un objet graphique (10) avec une représentation d'au moins une partie de la surface terrestre, et
- la représentation de la partie affichée de la surface terrestre est subdivisée en zones géographiques (11, 12) de fuseaux horaires différents,
**caractérisé en ce que**
- la position d'un objet d'actionnement (5) est détectée à l'avant de la surface d'affichage (2) ou sur celle-ci,
- en fonction de la position détectée de l'objet d'actionnement (5) par rapport aux zones géographiques (11, 12) affichées de différents fuseaux horaires dans la représentation de l'objet graphique (10), une zone géographique (12) qui appartient à un fuseau horaire unique est sélectionnée et affichée de manière à être mise en valeur, et
- le fuseau horaire de la zone géographique sélectionnée (12) est associé à au moins une horloge (9) du véhicule (1).

2. Procédé selon la revendication 1,
**caractérisé en ce qu'**un dispositif de commande (7) génère des données graphiques qui commandent la surface d'affichage (2) de manière à afficher un autre objet graphique (13) désignant une partie des pays et/ou des villes et/ou des régions qui sont contenus dans la zone géographique sélectionnée (12).

3. Procédé selon la revendication 1 ou 2,
**caractérisé en ce que** le dispositif de commande génère des données graphiques qui commandent la surface d'affichage (2) de manière à afficher un autre objet graphique (13) affichant l'heure actuelle dans la zone géographique sélectionnée (12).

4. Procédé selon l'une quelconque des revendications précédentes,
**caractérisé en ce que** le dispositif de commande (7) génère des données graphiques qui commandent la surface d'affichage (2) de manière à afficher un autre objet graphique (14) affichant le décalage temporel relatif de la zone géographique sélectionnée (12) par rapport à une zone d'un fuseau horaire déterminé.

5. Procédé selon la revendication 4,
**caractérisé en ce qu'**une zone géographique (12) est sélectionnée et mise en valeur lorsque l'objet d'actionnement (5) vient au contact d'une surface tactile (6) de la surface d'affichage (2) dans la région dans laquelle la zone géographique est affichée, et **en ce que** le contenu d'au moins un autre objet graphique (13, 14) est modifié de manière à afficher l'heure actuelle et/ou le décalage temporel relatif de la zone géographique sélectionnée (12), la zone géographique sélectionnée (12) n'étant cependant pas associée à l'horloge tant que l'objet d'actionnement (5) est en contact avec la surface tactile (6) de la surface d'affichage (2).

6. Procédé selon l'une quelconque des revendications précédentes,
**caractérisé en ce qu'**une zone géographique (12) est sélectionnée et mise en valeur lorsque l'objet d'actionnement (5) touche une surface tactile (6) de la surface d'affichage (2) dans la région dans laquelle la zone géographique est affichée, et **en ce que** la zone géographique sélectionnée (12) est associée à l'horloge lorsque le contact de l'objet d'actionnement (5) avec la surface tactile (6) de la surface d'affichage (2) est interrompu.

7. Dispositif d'actionnement (3) destiné à un véhicule (1) comportant
- une surface d'affichage (2) permettant de représenter graphiquement des informations dans le véhicule (1),
- un dispositif de commande (7) au moyen duquel des données graphiques destinées à un objet graphique (10) pouvant être représenté sur la surface d'affichage (2) peuvent être représentées, lequel dispositif de commande affiche une représentation d'au moins une partie de la surface terrestre, dans lequel la représentation de la partie affichée de la surface terrestre est subdivisée en zones géographiques (11, 12) de différents fuseaux horaires,
**caractérisé en ce que** le dispositif d'actionnement (3) comprend un dispositif d'entrée (6, 18) couplé au dispositif de commande (7), lequel dispositif d'entrée permet de détecter la position d'un objet d'actionnement (5) à l'avant de la surface d'affichage (2) ou sur celle-ci,
- **en ce que** des données graphiques peuvent être générées par le dispositif de commande (7) en fonction de la position détectée de l'objet d'actionnement (5) par rapport aux zones géographiques (11, 12) affichées de différents fuseaux horaires, lesquelles données graphiques commandent la surface d'affichage (2) de manière à afficher en la mettant en valeur une zone géographique sélectionnée (12) qui appartient à un fuseau horaire unique, et
- **en ce que** le dispositif de commande (7) peut générer, pour une horloge (9) du véhicule (1), un signal de commande qui est associé au fuseau horaire de la zone géographique sélectionnée (12).

8. Véhicule (1) comportant un dispositif d'actionnement (3) selon la revendication 7.
